(19) **Europäisches Patentamt / European Patent Office / Office européen des brevets**

(11) **EP 1 454 960 B1**

(12) # EUROPEAN PATENT SPECIFICATION

(45) Date of publication and mention
of the grant of the patent:
**24.10.2012 Bulletin 2012/43**

(51) Int Cl.:
*C08L 77/00* (2006.01)    *C08K 3/34* (2006.01)
*C08K 5/09* (2006.01)    *C08K 7/04* (2006.01)
*H01H 85/153* (2006.01)    *C08L 77/02* (2006.01)
*C08L 77/06* (2006.01)

(21) Application number: **02755809.7**

(22) Date of filing: **05.08.2002**

(86) International application number:
**PCT/JP2002/007946**

(87) International publication number:
**WO 2003/014225 (20.02.2003 Gazette 2003/08)**

(54) **POLYAMIDE RESIN COMPOSITION FOR FUSE ELEMENT AND FUSE ELEMENT**

POLYAMIDHARZZUSAMMENSETZUNG FÜR SICHERUNGSELEMENT UND SICHERUNGSELEMENT

COMPOSITION DE RESINE DE POLYAMIDE POUR ELEMENT FUSIBLE ET ELEMENT FUSIBLE

(84) Designated Contracting States:
**DE ES FR GB IT**

(30) Priority: **07.08.2001 JP 2001239217**

(43) Date of publication of application:
**08.09.2004 Bulletin 2004/37**

(73) Proprietor: **Pacific Engineering Corporation
Ogaki-shi,
Gifu-ken 503-0981 (JP)**

(72) Inventors:
 • **YAMAZAKI, Masaaki
 UNITIKA LTD., Uji Plastics Plant
 Uji-shi, Kyoto 611-0021 (JP)**
 • **FUJIMOTO, Koji
 UNITIKA LTD., Uji Plastics Plant
 Uji-shi, Kyoto 611-0021 (JP)**

 • **MURAKAMI, Iwao
 Pacific Engineering Corp.
 Ogaki-shi, Gifu 503-0981 (JP)**
 • **ANDOH, Hideki
 c/o Pacific Engineering Corp.
 Ogaki-shi, Gifu 503-0981 (JP)**

(74) Representative: **Vossius & Partner
Siebertstrasse 4
81675 München (DE)**

(56) References cited:
**EP-A- 1 394 214    JP-A- 11 071 517
JP-A- 11 140 308**

Remarks:
The file contains technical information submitted after the application was filed and not included in this specification

**Description**

Technical field

The present invention relates to a fuse element comprising a housing formed from a polyamide resin composition which is excellent in arc resistance, transparency, heat resistance and productivity and which is, for example, suitably usable for a fuse element for electric circuits for cars etc., The present invention also refers to an automobile having a 42V system comprising the fuse element.

Background Art

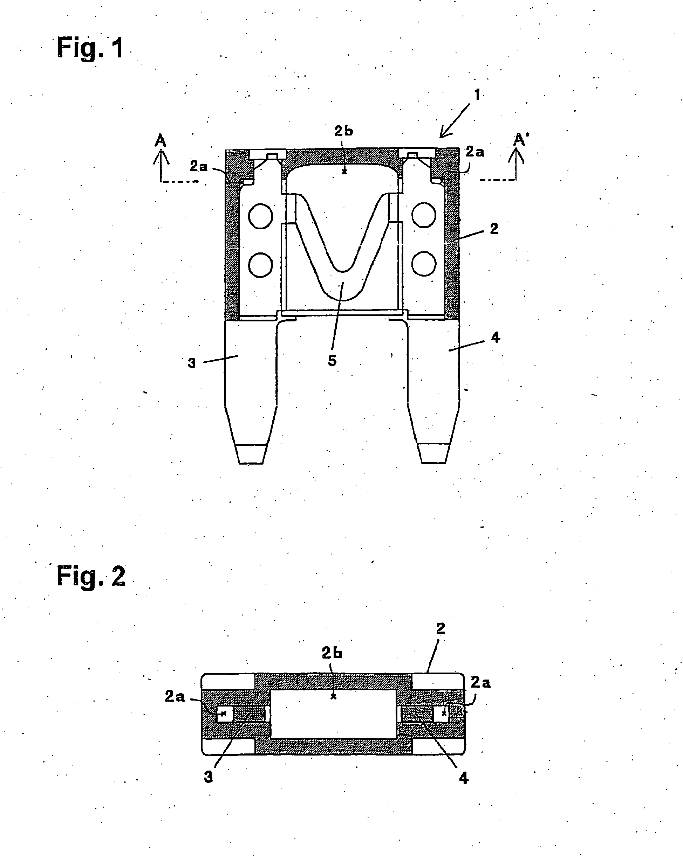

Wiring of various electrical components in an automobile is generally assembled in a fuse box, and the various electrical components are connected to a battery through fuse elements having a rated current value according to the magnitude of the electric current flowing thereto and operating frequency, etc. Such a fuse element 1 (Fig.1) is provided with a housing 2 and a pair of terminals 3, 4 projecting from a predetermined flat surface thereof and arranged in parallel to each other, and has a structure where a fusing-element 5 connected between both terminals is housed in the housing 2. When an unusual electric current equal to or more than a rating is generated due to some factors, conduction between an input terminal and an output terminal is turned off by melting fusing-element 5 of this fuse element, and it is prevented that overcurrent continues to flow to various electrical components. Conventionally, transparent resins such as polysulfones and polyethersulfones which are excellent in heat resistance and insulation are used for the housing 2 of the fuse element 1, and it is constituted so that it may be easily determined from the outside whether the fusing-element is melted.

A number of battery systems having 14 V power generation (12 V power accumulation) are conventionally mounted in automobiles, and the above described fuse element has been designed having a rated voltage 32 V and an interception property 32 V × 1000 A (rated voltage × rated interception capacity) in order to correspond to the battery system. However, in recent years the electricity consumption in a whole vehicle increased in accordance with increases of the mounted electrical components and electronic control devices, and expansion of size thereof. Thereby, it poses problems that vehicles weight is increased due to the enlargement of the battery or the alternator and of thickening of wire harness etc., and enhancement of vehicles voltage (42 V system) is now examined as a radical solution.

If the vehicles voltage is elevated into a 42 V system, at the time of melting of a fusing-element installed in a fuse element, an arc having a larger voltage value than the voltage value at the time of the fuse element melting in the conventional 14 V system will be generated for a long time. However, arc resistance of polysulfone and polyethersulfone etc. constituting a conventional housing is not so high as it can respond to the 42 V system. This is caused by carbonization of the polymer having aromatic ring in principal chain, and is an essential phenomenon resulting from the resin itself. That is, although the fusing-element was melted, leakage current flows on the inside of the housing, a conductive state between both of terminals is maintained, and there is a possibility that the housing and the terminal might be melt and broken. Therefore, development of a fuse element formed of a resin having a structure which does not carbonize in the inside of the housing at the time of melting and breaking of fusing-element even in the 42 V system has been required.

From the above circumstances, in order to maintain (a) an arc resistance required for a fuse element housing, a fuse element housing of aliphatic polyamide resins is now examined. However, further problems (b) to (e) have arisen by the selection of aliphatic polyamide resins as a priority item to be solved for arc resistance. That is: (b) deformation at the time of fuse melting; (c) transparency for fuse visual check; (d) abrasion of a mold at the time of molding; and (e) heat discoloration in use.

It is preferable to use nylon 66 resin having a high heat deformation temperature in aliphatic polyamides in order to prevent (b) deformation at the time of fuse melting. However, this resin has a high crystallinity and when it is used alone (c) transparency is lost so that visual checking of the fusing-element in a housing is not possible. This problem is solved by mixing nylon 6 which belongs to the same aliphatic polyamide resin group as the nylon 66 and by reducing the crystallinity of the whole mixed resin, since nylon 6 has a heat deformation temperature lower than that of nylon 66. It is, however, necessary that the heat deformation temperature that is decreased by mixing of nylon 6 should be compensated by addition of a little amount of fibrous reinforcing material (generally, a glass fiber is used). In this way, the combination of nylon 66 + nylon 6 + glass fiber has been examined as a resin composition satisfying (b) and (c). However, this combination of glass fiber as an inorganic reinforcing material causes the promotion of abrasion of the mold at the time of injection molding which results in the frequent exchanges of molds, and there is a problem (d) of reduced productivity.

Identification by classification based on color is given to fuse elements, for every magnitude of rated current in consideration of safety or convenience at the time of exchange. Therefore, (e) discoloration by heat in an engine room is preferably inhibited in materials for fuse element housings.

JP 11-140308 describes a polyamide resin composite comprising (A) 100 parts by weight polyamide resin synthesized from a salt-type monomer; (B) 5 to 1,000 parts by weight polyamide resin synthesized from an amino carboxylic acid type monomer containing a phyllosilicate in an amount of 1 to 60 wt.% in terms of ash content; and (C) 0.01 to 5 parts by weight hypophosphite.

EP 0 885 920 A1 discloses a polyamide resin composition comprising (A) a reinforced polyamide resin which comprises 100 parts by weight of a nylon 6 homopolymer or copolymer and 1 to 20 parts by weight of a layered silicate uniformly dispersed in the polymer on the molecular level and (B) a non-reinforced polyamide resin, a test specimen of said composition having a tensile weld strength of 45 MPa or higher and a flexural modulus of 4 GPa or higher.

EP 1 394 214 A1 which belongs to the state of the art according to article 54(3) EPC describes a polyamide resin composition for fuse elements consisting of 95 to 5% by mass of polyamide copolymer (A) and 5 to 95% by mass of polyamide homopolymer (B). In a preferred embodiment, the polyamide resin composition comprises a silicate layer of swellable lamellar silicate (C) which is dispersed on molecular order level and the content of the silicate layer (C) is 0.1 - 20% by mass.

Disclosure of the Invention

(Technical Problems to be Solved by the Invention)

An object of the present invention is to provide a fuse element having a housing made from a resin composition which suppresses the generation of a leakage current caused by carbonization inside a housing at the time of blowing of a fusing-element in a fuse element mounted in a battery system with elevated voltage, and which has heat-resistant deformation property, transparency and low mold abrasion property suitable for the fuse element, and further has heat-resistant discoloration property.

(Method for Solving the Same)

As a result of examination performed wholeheartedly in order to solve the above-mentioned problems by the present inventors', it was found that the above-mentioned problems might be solved by using a resin composition including polycaproamide resins (nylon 6) and poly(hexamethylene adipamide) resins (nylon 66) as a housing to give an excellent housing for fuse elements.

The present invention is as described in the claims.

Brief Description of the Drawings

Fig. 1 is a vertical sectional view of a blade fuse for automobiles showing an embodiment of the present invention.
Fig. 2 is an A-A' line sectional view in Fig. 1

Embodiments for Carrying out the Invention

Hereinafter, the present invention will be described in detail.

A resin composition used in the fuse elements of the present invention comprises; a mixed polyamide of 100 parts by mass containing (A) polycaproamide (nylon 6) of 95 to 5% by mass and (B) poly(hexamethylene adipamide) (nylon 66) of 5 to 95% by mass; and (C) a silicate layer of lamellar silicate of 0.1 to 20 parts by mass dispersed on molecular order level in the above described (A) and/or (B).

A mixed polyamide with (A) nylon 6 and (B) nylon 66 is required in order to maintain arc resistance required as a fuse element housing.

A mixing ratio of (A) polycaproamide (nylon 6) and (B) poly (hexamethylene adipamide) (nylon 66) in a resin composition used in the fuse element of the present invention is dependent on a balance of transparency and heat resistance, and in the present invention, it is required to be in a range of (A) / (B) = 5/95 to 95/5 (mass ratio), preferably in a range of 15/85 to 85/15. When polycaproamide exceeds 95% by mass, heat resistance of the molded housing deteriorates, being not preferable. On the other hand, in case of less than 5% by mass transparency deteriorates, being not also preferable.

Polycaproamide (nylon 6) in the present invention is a polymer having amide linkage in principal chain obtained by aminocaproic acid, ε-caprolactam, etc. as raw materials.

Poly(hexamethylene adipamide) (nylon 66) is a polymer having amide linkage in principal chain obtained by hexamethylenediamine and adipic acid (or salts thereof) as raw

Although a molecular weight (relative viscosity) of a mixed polyamide resin used in the present invention is not especially limited, it is desirable that a relative viscosity measured under conditions that temperature of 25°C, concentration of 1 g/dL, sulfuric acid having a concentration of 96% by mass used as a solvent is in a range of 1.5 to 5.0, especially in a range of 2.0 to 4.0. When relative viscosity is less than 1.5, a tendency for the mechanical properties of molded article to be inferior is shown, and on the other hand when exceeding 5.0, a tendency for moldability to deteriorate remarkably is shown.

At least one of polycaproamide (nylon 6) or poly(hexamethylene adipamide) (nylon 66) used in the fuse element of the present invention includes a silicate layer of lamellar silicate dispersed on molecular order level. A content is required to be 0.1 to 20 parts by mass, preferably 0.5 to 10 parts by mass, more preferably 0.8 to 5 parts by mass per 100 parts by mass of a mixed polyamide resin. Since the silicate layer has nanometer size as mentioned later and is minutely dispersed, it has a higher efficiency to reinforce resin matrix than other reinforcing materials. For this reason, in order to give rigidity equivalent to glass fiber reinforced resin, for example, small addition can demonstrate enough effectiveness. Therefore, when a composition used in the fuse element of the present invention is applied to a thin molded material such as a fuse element housing, transparency becomes high. A size of the silicate layer itself also may help to demonstrate high transparency. Further, since the reinforcing material has considerably small size, a degree of abrasion of mold is substantially equivalent to that of polyamide resins not including reinforcing materials. In a large quantity of continuous production by injection molding, abrasion loss of mold may be significantly reduced compared with injection molding by other reinforcing materials, such as glass fibers, and results in excellent productivity.

When this amount of composition is less than 0.1 parts by weight, reinforcement effectiveness of the resin matrix by a silicate layer of lamellar silicate is poor, and rigidity and heat resistance may deteriorate when the polyamide resin composition is applied to fuse elements. When the amount of composition exceeds 20 parts by weight, toughness deteriorates and transparency of polyamide resin composition deteriorates, and therefore this is not preferable.

Lamellar silicate in the present invention has a structure formed of a crystal layer (silicate layer) having silicate as a principal component and being negatively charged, and ion-exchangable cations that intervene between the layers. A silicate layer is a fundamental unit constituting a lamellar silicate, and is an inorganic crystal having a shape of a plate obtained by breaking down a layer structure of lamellar silicate (hereinafter referred to as "cleavage"). A silicate layer in the present invention represents one sheet of this layer, or a laminated state comprising not more than 5 layers by average of this layer. Dispersion in "molecule level" represents a state in which in case silicate layers of lamellar silicate are dispersed in a resin matrix, each of them exists with a distance between layers maintaining an average of not less than 2 nm, without formation of lumps. The distance between layers here represents a distance between a center of gravity of the above described silicate layer. This state may be confirmed by observation of a photograph of a specimen of polyamide resin including the lamellar silicate by means of a transmission electron microscope.

A lamellar silicate is usable regardless of natural or artificial materials. Examples thereof include smectite groups (montmorillonite, beidellite, hectorite, sauconite, etc.); vermiculite groups (vermiculite etc.); mica groups (fluoromica, muscovite, palagonite, phlogopite, lepidolite, etc.); brittle mica groups (margarite, clintonite, anandite, etc.); chlorite groups (donbassite, sudoite, cookeite, clinochlore, chamosite, nimite, etc.). In the present invention, swellable fluoromica of Na type or Li type and montmorillonites are especially suitably used. Since swellable fluoromica is excellent in whiteness, it is especially preferable due to the appearance of the resin composition obtained.

Swellable fluoromica has a structural formula generally shown by the following formula, and is obtained by a melting or intercalation method.

$$Na_\alpha(Mg_xLi_\beta)Si_4O_yF_z$$

(in which $0 \le \alpha \le 1$, $0 \le \beta \le 0.5$, $2.5 \le x \le 3$, $10 \le y \le 11$, $1.0 \le z \le 2.0$)

Montmorillonite is represented by the following formula and is obtained by refining natural products using elutriation processing etc.

$$M_aSi_4(Al_{2-a}Mg)O_{10}(OH)_2 \cdot nH_2O$$

(in which M represents cations such as sodium, and $0.25 \le a \le 0.6$. Since the number of water molecules combined with the cation having an ion exchange property between layers might be varied according to conditions, such as kind of cation and humidity, it is represented by $nH_2O$ in the formula.)

In addition, the existence of ion substituted products with the same types of montmorillonites such as magnesium montmorillonite, iron montmorillonite and iron magnesian montmorillonite is known, and these also may be usable.

With respect to the cation exchange capacity (CEC) determined by a method mentioned later, although the lamellar silicate used in the present invention is not especially limited, it needs to be taken into consideration in following cases, and it is desirable that it is usually 40 to 200 milli-equivalent/100g. Since the swelling ability is low when this CEC is less than 40 milliequivalent/100g, sufficient cleavage is not attained when manufacturing a polyamide resin composition including silicate layer, resulting in that an effective improvement in rigidity or heat-resistance is not achieved. On the other hand, when the CEC exceeds 200 milli-equivalent/100g, the interaction between the polyamide resin matrix and the silicate layer becomes remarkably high, and it is not preferable that the toughness of the obtained polyamide resin composition significantly deteriorates and the resin becomes fragile.

In the present invention, as a case that should be taken into consideration, especially concerning CEC of lamellar silicate, a situation may be mentioned in which a crack is formed based on shortage of strength in welded part existing in a housing part in a process of assembling a fuse element housing comprising a resin composition into a fuse element of the present invention. In order to avoid this phenomenon posing a problem in respect of productivity, it is preferable that lamellar silicate having a smaller CEC within the above described range of CEC of the lamellar silicate is used. In this case, it is effective to use lamellar silicate having CEC of, for example, 50 to 100 milli-equivalent/100g, preferably of 50 to 70 milli-equivalent/100g. Use of such a lamellar silicate does not give significant change to rigidity or heat resistance of the polyamide resin composition, but may be used satisfactorily as a fuse element housing.

In the present invention, there is especially no limitation about initial particle diameter of the above described lamellar silicate. Initial particle diameter here is a particle diameter of lamellar silicate as a raw material used when manufacturing a polyamide resin including lamellar silicate in the present invention, and it is different from a size of silicate layer in a composite material. However, this particle diameter affects mechanical properties of such a polyamide resin including lamellar silicate etc. not a little, and the particle diameter may be controlled by pulverization using a jet mill etc. in order to control the physical properties. Further, when synthesizing swellable fluoromica based minerals by an intercalation method, the initial particle diameter may be varied by selecting appropriately a particle diameter of talc as a raw material. Since the initial particle diameter may be adjusted in a larger range by combined use with pulverization, this selection method is a preferable method.

Next, a method for manufacturing a polyamide resin composition used in the fuse elements of the present invention will be hereinafter described.

In polycaproamide (nylon 6) or poly(hexamethylene adipamide) (nylon 66) used in the fuse element of the present invention, it is required that lamellar silicate is added and is cleaved to give a polyamide resin in which a silicate layer is dispersed on molecular order level. This may be enabled using a polyamide resin obtained by a method in which a predetermined amount of the above described monomer is polymerized in the presence of the above described lamellar silicate or by a method in which the lamellar silicate and the polyamide are melted and kneaded. Preferably a polyamide resin obtained by the former method is used. Monomer of polycaproamide (nylon 6) or poly(hexamethylene adipamide) (nylon 66) and a predetermined amount of lamellar silicate are introduced into an autoclave, and melt polymerization is performed within a range of a temperature of 240 to 300°C, a pressure of 0.2 to 3 MPa, and for 1 to 15 hours. As conditions for melt polymerization at that time, usual conditions for melt polymerization of nylon 6 and nylon 66 may be employable.

It is preferable to add acids when polyamide resin containing lamellar silicate is polymerized. Addition of acids will promote cleavage of the lamellar silicate and dispersion of the silicate layer in a resin matrix. Thereby a polyamide resin having a high rigidity and high heat resistance is obtained.

As long as an acid has a $pK_a$ value (25°C, a value in water) of 0 to 6 or a negative value, either organic acids or inorganic acids may be usable. Examples thereof include benzoic acid, sebacic acid, formic acid, acetic acid, chloroacetic acid, trichloroacetic acid, trifluoroacetic acid, nitrous acid, phosphoric acid, phosphorous acid, hydrochloric acid, hydrobromic acid, hydroiodic acid, nitric acid, sulfuric acid, perchloric acid, etc.

The addition amount of acid is preferably not more than 3 times in molar quantity to the total cation exchange capacity of the lamellar silicate, and more preferably 1 to 1. 5 times in molar quantity. When this addition amount exceeds 3 times in molar quantity, it is not preferable because the degree of polymerization of the polyamide resin becomes hard to increase, and productivity lowers.

Mixing of polycaproamide (nylon 6) with poly(hexamethylene adipamide) (nylon 66) may be performed by a pellet blending or a melt-kneading at a predetermined mixing ratio within the above described range. Only one selected from polycaproamides (nylon 6) and poly (hexamethylene adipamides) (nylon 66) in which silicate layer is dispersed on molecular order level is used and may be blended with the other amide resin in which silicate layer is not dispersed. It goes without saying that both may be polyamide resins in which silicate layer is dispersed, and that these may be mixed.

A polyamide resin composition used in the fuse elements of the present invention preferably include 0.1 to 4 parts by mass of antioxidants per 100 parts by mass of mixed polyamide, and more preferably 0.3 to 3 parts by mass. Thereby an important characteristic of heat-resistant discoloration property as a fuse element may be provided. In case of less than 0.1 parts by mass, inhibition effect for discoloration is poor. When exceeding 4 parts by mass, effect corresponding to an amount of addition may not be demonstrated in many cases, and there is sometimes a tendency that raise of melt viscosity of the polyamide resin deteriorates moldability. Examples of preferable antioxidants include phenol based antioxidants exemplified by 2,6-di-ortho-butyl-4-methyl phenol, n-octadecyl-3- (3',5'-di-t-butyl-4'-hydroxy phenyl) propionate, tetrakis [methylene-3-(3,5-di-t-butyl-4-hydroxy phenyl) propionate]methane, tris(3,5-di-t-butyl-4'-hydroxy benzyl)isocyanurate, 4,4'-butylidenebis-(3-methyl-6-t-bytyl phenol), triethylene glycol-bis-[3-(3-t-butyl-4-hydroxy-5-methyl phenyl)propionate], 3,9-bis {2-[3-(3-t-butyl-4-hydroxy-5-methyl phenyl) propionyloxy]-1,1-dimethyl ethyl}-2,4,8,10-tetraoxaspiro[5,5] undecane etc; sulfur based antioxidants exemplified by dilauryl-3,3'-thiodipropionate, dimyristyl-3,3'-thiodipropionate, distearyl-3,3'-thiodipropionate, pentaerythritol tetrakis(3-lauryl thiopropionate) etc.; and phosphorus based antioxidants etc. such as tris(nonylphenyl)phosphite ("ADKstab 1178"), tris(2,4-di-t-butylphenyl)phosphite ("ADKstab 2112"), bis(nonylphenyl)pentaerythritol diphosphite ("ADKstab PEP-4"), distearylpentaerythritol diphosphite ("ADKstab PEP-8"), bis(2,4-di-t-butylphenyl)pentaerythritol phosphite ("ADKstab PEP-24G"), bis(2,6-di-t-butyl-4-methylphenyl)pentaerythritol phosphite ("ADKstab PEP-36"), 2,2-methylenebis(4,6-di-t-butylphenyl)octyl phosphite ("ADKstab HP-10"), tetrakis(2,4-di-t-butylphenyl)-4,4'-biphenylene-di-phosphonite) etc. Especially preferable antioxidants are phosphorus based antioxidants. Examples of such compounds include ADKstab PEP-4, PEP-8, PEP-24G and PEP-36 etc. manufactured by ASAHI DENKA Co., Ltd. Among them, PEP-24G is most preferable to demonstrate excellent heat-resistant discoloration.

Metal soap based lubricants of 0.01 to 0.5 parts by mass, preferably 0.01 to 0.3 parts by mass per 100 parts by mass of mixed polyamide may be included in a polyamide resin composition used in the fuse elements of the present invention in order to improve mold-releasing characteristic. When this content is less than 0.01 parts by mass, effect on mold-releasing characteristic is poor. When exceeding 0.5 parts by mass, influence of notable decrease in weld strength etc. may become remarkable. Examples of metal soap based lubricants include stearic acid based metal salts, such as calcium stearate, magnesium stearate, aluminum stearate, zinc stearate, barium stearate, stannic stearate etc.; lauric acid metal salts, such as calcium laurate, lauric acid, zinc laurate, etc.; ricinoleic acid based metal salts, such as barium ricinolate, calcium ricinolate, zinc ricinolate, etc.; naphthenic acid based metal salts, such as barium naphthenate and zinc naphthenate; montanic acid based metal salts, such as sodium montanate, lithium montanate, calcium montanate, and zinc montanate, etc. A preferable example thereof is Montanic acid based metal salt. As examples of such compounds include Licomont NaV101, Licomont CaV102 and Licomont LiV103 grade manufactured by Clariant AG may be mentioned, and especially Licomont NaV101 provides preferable effect. Inorganic fibrous reinforcing material may be further blended with a polyamide resin composition used in the fuse elements of the present invention, if needed, in a range of 3 to 10 parts by mass per 100 parts by mass of mixed polyamide. Amount of blend is adjusted to addition of silicate layer in a range that does not spoil transparency and abrasion-proof property of mold greatly. Examples of inorganic fibrous reinforcing material are glass fiber, Wallastonite, metal whisker, ceramic whisker, potassium titanate whisker, carbon fiber, etc. Glass fiber is most preferable.

In manufacturing a polyamide resin composition used in the fuse elements in the present invention, unless characteristics are spoiled greatly, dyestuff, pigment, coloring inhibitor, weathering agent, flame retarder, plasticizer, nucleus agent, mold lubricant, etc. may be added other than thermostabilizers, antioxidant, and reinforcing material. These may just be added, if needed, at the time of manufacture of either one of polyamides, and of mixing of both polyamides.

Examples of other reinforcing materials include, for example, clay, talc, calcium carbonate, zinc carbonate, silica, alumina, magnesium oxide, calcium silicate, sodium aluminate, sodium aluminosilicate, magnesium silicate, glass balloon, carbon black, zeolite, hydrotalcite, boron nitride, graphite, etc.

A polyamide resin composition used in the fuse elements of the present invention has excellent arc resistance and anti-heat deformation property, transparency, and abrasion-proof property of mold. Such a resin composition may be easily molded into a housing for fuse elements by conventional molding methods, such as injection molding.

Examples

The present invention will be described with reference to the Examples still more in detail. The present invention is, however, not limited only to these Examples. In addition, measurements of raw material and various physical properties values used in Reference Examples, Examples and Comparative Examples are shown below.

1. Raw Materials

(1) Swellable fluoromica

"Somasif ME 100" by Co-op Chemical Co., Ltd was used. According to the CEC measurement mentioned later, this CEC was 100 milli-equivalent/100g.

(2) Montmorillonite

"Kunipia-F" manufactured by Kunimine Co., Ltd. was used. According to the CEC measurement mentioned later, this CEC was 110 milli-equivalent/100g.

(3) Nylon 6 (P-3)

As nylon 6 that does not include silicate layer "A1030BRL" manufactured by UNITIKA LTD. was used.

(4) Nylon 66 (P-5)

As nylon 66 that does not include silicate layer "A125" manufactured by UNITIKA LTD. was used.

(5) Heat-resistant modifier (phosphorous acid ester based compound)

"PEP-24G" manufactured by ASAHI DENKA Co. Ltd. was used.

(6) Mold-releasing modifier (metal soap based lubricant)

"Licomont NaV101" manufactured by Clariant AG was used.

(7) Glass fiber (inorganic fibrous reinforcing material)

"T289" manufactured by Nippon Electric Glass Co., Ltd. was used.

2. Measuring Method

(1) Relative viscosity of polyamide resin

In 96%by weightconcentrated sulfuric acid, dry pellet of polyamide resin was dissolved so that a concentration of 1 g/dL might be obtained, and the measurement was carried out at 25°C. When silicate layer is included in the polyamide resin, dry pellet was measured based on a value of inorganic ash content so that the concentration of the polyamide component of 1 g/dL might be obtained. The pellet was dissolved, and subsequently the inorganic component was filtered out using a G-3 glass filter, and the measurement was carried out.

(2) Content of inorganic ash in silicate layer-dispersed polyamide

Pellet of dry polyamide resin was precisely weighed into a porcelain crucible, after incineration for 15 hours in an electric furnace maintained at 500°C a residue was obtained as an inorganic ash. The ash content was calculated according to following formula.

$$\text{Inorganic ash content(\% by weight)= [inorganic ash content weight (g)]/[total weight of specimen before incineration processing (g)]} \times 100$$

(3) Cation exchange capacity

A value thereof was obtained based on the cation exchange capacity measuring method (JABS-106-77) of bentonite (powder) by Japan Bentonite Manufacturers Association Standard.
That is, using an equipment in which a decoction container, exudation tubing, and receiver were continuously connected lengthwise, first all of the ion exchangeable cations between the layers of the lamellar silicate were exchanged by $NH_4^+$ by using a 1N ammonium acetate aqueous solution adjusted to pH=7. Subsequently, after fully cleaning with water and ethyl alcohol, the above mentioned $NH_4^+$ type lamellar silicate was dipped into 10% by weight of potassium chloride aqueous solution, and the $NH_4^+$ in the specimen was exchanged by $K^+$. Then,the leached-out $NH_4^+$ in connection with the above described ion exchange reaction was titrated for neutralization with 0.1N sodium hydroxide aqueous solution. Thereby the cation exchange capacity (milli-equivalent/100g) of swellable lamellar silicate, that is raw material, was determined.

(4) Dispersion state of silicate layer

A small sample cut from a specimen for a method of bending modulus measurement, mentioned later, was embedded into epoxy resin, an ultrathin section was cut out using a diamond knife. A photograph was taken of this specimen using a transmission electron microscope (manufactured by Japan Electron Optics Laboratory Co., Ltd., JEM-200CX type, accelerating voltage 100 kV). In a silicate layer of the swellable lamellar silicate displayed in this electron microscope photograph, the approximate size and distance between layers were obtained, and thus dispersibility of the silicate layer was evaluated.

(5) Arc-resistance of polyamide resin composition

Measured based on ASTM D-495.

(6) Bending Modulus of specimen

Measured based on ASTM D-790.

(7) Load deflection temperature of specimen

Measured based on ASTM D-648 by load of 0.45 MPa.

(8) Transparency

Injection molding of a plate of 50 mm $\times$ 90 mm $\times$ 1 mm was carried out using an IS-100E injection molding machine (manufactured by TOSHIBA MACHINE CO., LTD.) with a set value of barrel temperature of 280°C, and mold temperature of 40°C. This plate was placed on a cardboard with characters written thereon, and it was evaluated whether the characters on the cardboard can be read.
○: readable
×: not readable

(9) Heat sag (amount of hang-down)

Injection molding of a specimen of 120 mm $\times$ 12.7 mm $\times$ 0.8 mm was carried out using an IS-100E injection molding machine (manufactured by TOSHIBA MACHINE CO., LTD.) with a set value of barrel temperature of 280°C, and mold temperature of 40°C. An edge of the obtained molded specimen was held with a clamp with a length of 20 mm in cantilever and in longitudinal direction and subjected to heat-treating for 20 seconds in 290°C oven. An amount of hang-down was measured. The larger this value is, the lower the form retention property is.

(10) Heat discoloration property

Injection molding of a specimen of 50mm $\times$ 90 mm $\times$ 1 mm was carried out using an IS-100E injection molding machine (manufactured by TOSHIBA MACHINE CO., LTD.) with a set value of barrel temperature of 280°C, and mold temperature of 40°C. This plate was heat-treated in 125°C oven for 1000 hours, and color change $\Delta E$ before and after heat treatment was measured using SZ-$\Sigma$90 type color difference meter manufactured by Nippon Denshoku Industries Co., Ltd. The smaller this value is, the smaller the degree of discoloration is.

(11) Mold-releasing characteristic

Using a CND15 A-II injection molding machine manufactured by Niigata Iron Works, injection molding of a piece of molding of 10 mm x -10 mm x 1 mm was carried out 100,000 times with a set value of barrel temperature of 280°C, and mold temperature of 30°C. The percentage (%) of inferior goods in mold release with respect to the total number of shots was calculated and evaluated. The smaller this value is, the more excellent the mold-releasing characteristic is and the higher the productivity is.

(12) Mold abrasion property

Using a CND15 A-II injection molding machine manufactured by Niigata Iron Works, injection molding of a piece was carried out 100,000 times with a set value of barrel temperature of 280°C, and mold temperature of 30°C, where a mold made of PX5 steel materials (Daido Steel Co., Ltd.) was used to provide a piece of molding of 10 mm $\times$ 10 mm $\times$ 1 mm having a side gate with a width of 2.0 mm, a height of 0.5 mm and a length of 3.0 mm. A height of the part gate of molded piece was measured at the time. The height was compared with that at a start of molding, and the percentage of increase (%) in height was evaluated. The smaller the value is, the smaller the amount of abrasion is.

Reference Example 1

Manufacture of silicate layer- dispersed polyamide (P-1)

$\varepsilon$-Caprolactam 1.0 kg and swellable fluoromica 400 g (total amount of CEC equivalent to 0.4 mole) were mixed into water 1 kg, and were agitated for 1 hour using a homogenous mixer. Then, the resultant mixed solution and 46.2 g (0.4 mole) of 85% by weight phosphoric acid aqueous solution were introduced into an autoclave with 30 liters of capacity containing $\varepsilon$-caprolactam 9.0 kg beforehand. The temperature of the mixed solution was raised to 120°C with agitation. Then the temperature was maintained for 1 hour while agitation was continued. The mixed solution was heated up to 260°C and pressure was raised to 1.5 MPa. The temperature was maintained at 260°C, and pressure was maintained at 1.5 MPa for 2 hours, while emitting steam gradually. The pressure was decreased to atmospheric pressure in 1 hour. Polymerization was further continued for 40 minutes.

When polymerization was completed, the resultant product of the reaction above was taken out in the shape of strands, and was cut after cooling and solidification. This was refined to obtain nylon 6 (P-1) including silicate layer.

When transmission electron microscope observation was performed on pellets of P-1 after rafination and drying, it was confirmed that the swellable fluoromica-based mineral was cleaved, and the silicate layer was dispersed on a molecular order level in the resin matrix. In addition, the content of the silicate layer in P-1 by ash content measurement was 4.5% by weight.

Reference example 2

Manufacture of silicate layer- dispersed polyamide (P-2)

Nylon 6 (P-2) including silicate layer was obtained as in Reference Example 1, except for having used montmorillonite instead of swellable fluoromica, and having used 85% by weight phosphoric acid aqueous solution (50.8 g) equivalent to total amount of CEC of montmorillonite (0.44 mole).

When transmission electron microscope observation was performed on pellets of P-2 after rafination and drying it was confirmed that montmorillonite was cleaved, and the silicate layer was dispersed on a molecular order level in the resin matrix. In addition, the content of the silicate layer in P-2 by ash content measurement was 4.5% by weight.

Reference Example 3

Manufacture of silicate layer- dispersed polyamide (P-4)

Swellable fluoromica 400 g was mixed with water 1 kg at room temperature. The mixture was agitated for 2 hours using a homogeneous mixer to give a water dispersion of swellable fluoromica.

On the other hand, nylon 66 salt 10 kg (produced by BASF AG "AH salt") and water 2 kg were introduced into an autoclave with 30 liters of capacity. The temperature was raised to 280°C, and the pressure was raised to 1.8 MPa, while being agitated. The temperature was maintained at 280°C and the pressure was maintained at 1.8 MPa for 2 hours, while emitting steam gradually. The pressure was decreased to 1.0 MPa in 1 more hour. At this time, the whole quantity of the water dispersion of swellable fluoromica , based mineral prepared previously was introduced, and conditions of 280°C and 1. 0 MPa were maintained for 1 hour. Then, the pressure was decreased to atmospheric pressure in 1 hour. Polymerization was further performed under atmospheric pressure for 1 hour.

When polymerization was completed, the resultant product of the reaction above was taken out in a shape of strands, and was cut after cooling and solidification to give nylon 66 (P-4) including silicate layer.

When transmission electron microscope observation was performed on pellets of P-4 after drying, it was confirmed that the swellable fluoromica based mineral was cleaved, and the silicate layer was dispersed on a molecular order level in the resin matrix. In addition, the content of the silicate layer in P-4 by ash content measurement was 4.1% by weight.

Examples 1 to 14

Polyamide resin compositions having compositions of Examples 1 to 14 shown in Table 1 were obtained by melt-kneading using a TEM-37BS type biaxial extruder manufactured by TOSHIBA MACHINE CO., LTD. Each resin of P-1 to P-5 was blended in the compounding ratio indicated in the table, and cylinder temperature was set at 270 to 290°C, screw speed at 200 rpm, and extrusion amount at 150 kg/hr. Immediately after extrusion the strands were water-cooled, and pelletized in a pelletizer. The obtained pellets were provided to injection molding after drying.

Table 1

| Housing composition | | | | Examples | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Mixing ratio of polyamide raw material (part by weight) | Resin having nylon 6 as principal component | P-1* | | 40.7 | 40.7 | 22.2 | 40.7 | 40.7 | 40.7 | 40.7 | 40.7 | 83 | 40 | 20.2 | 40.7 | - | - |
| | | P-2* | | - | - | - | - | - | - | - | - | - | - | - | - | 40.7 | - |
| | | P-3 | | - | - | 17.8 | - | - | - | - | - | - | 39 | - | - | - | 41 |
| | Resin having nylon 66 as principal component | P-4* | | - | - | - | - | - | - | - | - | - | - | - | - | - | 61.6 |
| | | P-5 | | 61.1 | 61.1 | 61.1 | 61.1 | 61.1 | 61.1 | 61.1 | 61.1 | 21 | 21 | 80.7 | 61.1 | 61.1 | - |
| Amount of each component in the above-mentioned mixture (part by weight) | | (A)/(B) | | 39/61 | 39/61 | 39/61 | 39/61 | 39/61 | 39161 | 39/61 | 39/61 | 79/21 | 79/21 | 19/81 | 39/61 | 39/61 | 41/59 |
| | | (C) | | 1.8 | 1.8 | 1.0 | 1.8 | 1.8 | 1.8 | 1.8 | 1.8 | 3.7 | 1.8 | 0.9 | 1.8 | 1.8 | 2.6 |
| Other additives | Ester of phosphorous acid | (part by weight) | | - | 0.1 | 0.1 | 0.3 | 1.0 | 2.0 | 1.0A | 1.0HA | 1.0 | 1.0 | 1.0 | 1.0 | 1.0 | 1.0 |
| | Metal soap based lubricant | (part by weight) | | - | 0.2 | 0.2 | 0.2 | 0.2 | 0.2 | 0.2 | 0.2 | 0.2 | 0.2 | 0.2 | 0.2 | 0.2 | 0.2 |
| | Inorganic fibrous reinforcing material | (part by weight) | | - | - | - | - | - | - | - | - | - | - | - | 4.0 | - | - |

(continued)

| | | | Examples | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Physical properties | Arc-resistance | (sec) | 140 | 140 | 140 | 140 | 140 | 140 | 140 | 140 | 138 | 138 | 148 | 146 | 140 | 148 |
| | Bending Modulus | (MPa) | 4.0 | 4.0 | 3.8 | 4.0 | 4.0 | 4.0 | 4.0 | 4.0 | 4.2 | 3.8 | 3.8 | 4.3 | 4.1 | 4.8 |
| | Load deflection temperature | (°C) | 200 | 200 | 190 | 200 | 200 | 200 | 200 | 200 | 200 | 190 | 215 | 230 | 200 | 240 |
| | Transparency | | 0 | 0 | 0 | 0 | 0 | 0 | 0 | 0 | 0 | 0 | 0 | 0 | 0 | 0 |
| | Heat sag (amount of hang-down) | (mm) | 10 | 10 | 12 | 10 | 10 | 10 | 10 | 10 | 10 | 12 | 8 | 2 | 10 | 6 |
| | Heat discoloration property ($\Delta$E) | | > 40 | 20 | 20 | 12 | 8 | 6 | > 40 | > 40 | 9 | 9 | 10 | 9 | 12 | 10 |
| | Mold-releasing characteristic | (%) | < 1.5 | < 0.5 | <0.5 | <0.5 | < 0.5 | <0.5 | <0.5 | <0.5 | <0.5 | <0.5 | < 0.5 | <0.5 | <0.5 | <0.5 |
| | Mold abrasion property (percentage of height increase) | (%) | 0.3 | 0.3 | 0.3 | 0.3 | 0.2 | 0.3 | 0.2 | 0.2 | 0.2 | 0.2 | 0.3 | 1.0 | 0.3 | 0.2 |

Notes : "*" shows silicate layer-dispersed polyamide.
"(A)" represents nylon 6 component, (B) represents nylon 66 component, and (C) represents silicate layer component, respectively.
In column of Ester of phosphorous acid in Examples 7 and 8,
"A" represents amine based antioxidant (Nowguard 455 manufactured by Shiraishi Calcium Co.), "HP" represents hindered phenol compound (IRGANOX 1098 manufactured by Chiba Specially Chemicals). Each of them was used in an amount of 1.0 part by weight instead of the ester of phosphorous

EP 1 454 960 B1

Comparative Examples 1 to 9

Comparative Examples 1 to 5 shown in Table 2 are test results independently carried out for each of P-1 to P-5. Polyamide resin compositions having the compositions in Comparative Examples 6 to 9 were obtained by melt-kneading using a TEM-37BS type biaxial extruder manufactured by TOSHIBA MACHINE CO., LTD. Each resin was blended in each compounding ratio, and the cylinder temperature was set at 270 to 290°C, the screw speed at 200 rpm, and the extrusion amount at 150 kg/hr. Immediately after extrusion the strands were water-cooled, and pelletized in a pelletizer. The obtained pellets were provided to injection molding after drying.

Table 2

| | | | | Comparative Examples | | | | | | | | | Conventional Example |
|---|---|---|---|---|---|---|---|---|---|---|---|---|---|
| | | | | 1 | 2 | 3 | 4 | 5 | 6 | 7 | 8 | 9 | |
| Housing composition | Mixing ratio of polyamide raw material (part by weight) | Resin having nylon 6 as principal component | P-1* | 104.7 | - | - | - | - | - | - | - | - | - |
| | | | P-2* | | 104.7 | - | - | - | - | - | - | - | - |
| | | | P-3 | - | - | 100 | - | - | 100 | - | 40 | 40 | - |
| | | Resin having nylon 66 as principal component | P-4* | - | - | - | 104.3 | - | - | - | - | - | - |
| | | | P-5 | | - | - | - | 100 | - | 100 | 60 | 60 | - |
| | Amount of each component in the above-mentioned mixture (part by weight) | | (A)/(B) | 100/0 | 100/0 | 100/0 | 0/100 | 0/100 | 100/0 | 0/100 | 40/60 | 40/60 | - |
| | | | (C) | 4.7 | 4.7 | 0 | 4.3 | 0 | 0 | 0 | 0 | 0 | - |
| | Polyethersulfone | | (% by weight) | - | - | - | - | - | - | - | - | - | 100 |
| | Other additives | Ester of phosphorous acid | (part by weight) | | | | | - | - | - | - | - | - |
| | | Metal soap based lubricant | (part by weight) | - | - | - | - | - | - | - | - | - | - |
| | | Inorganic fibrous reinforcinq material | (part by weight) | - | - | - | - | - | 42.9 | 42.9 | - | 10 | - |
| Physical properties | Arc-resistance | | (sec) | 145 | 143 | 146 | 148 | 148 | 147 | 150 | 148 | 148 | 100 |
| | Bending Modulus | | (MPa) | 4.5 | 4.4 | 2.6 | 4.7 | 2.9 | 7.8 | 8.1 | 3.9 | 5.6 | 2.6 |
| | Load deflection temperature | | (°C) | 195 | 195 | 174 | 242 | 235 | 215 | 260 | 225 | 245 | 210 |
| | Transparency | | | × | × | × | × | × | × | × | O | O | O |
| | Heat sag (amount of hang down) | | (mm)) | > 30 | > 30 | > 40 | 8 | 10 | 7 | 2 | > 30 | 2 | 4 |
| | Heat discoloration property (ΔE) | | | > 40 | > 40 | > 40 | > 40 | > 40 | > 40 | > 40 | > 40 | > 40 | 8 |
| | Mold-releasing characteristic | | (%) | < 1 | < 1 | < 2 | < 1 | < 2 | < 0.5 | < 0.5 | < 0.5 | < 0.5 | < 0.5 |

EP 1 454 960 B1

14

(continued)

| | | Comparative Examples | | | | | | | | | Conventional Example |
|---|---|---|---|---|---|---|---|---|---|---|---|
| | | 1 | 2 | 3 | 4 | 5 | 6 | 7 | 8 | 9 | - |
| Mold abrasion property (percentage of height increase) | (%) | 0.3 | 0.3 | 0.3 | 0.3 | 0.3 | 3.8 | 3.2 | 0.3 | 2.2 | |

Notes : " * " represents silicate layer dispersed polyamide.
"(A)" represents nylon 6 component, (B) represents nylon 66 component, and (C) represents silicate layer component, respectively.

Polyamide resin compositions obtained in Examples 1 to 14 gave preferable results in evaluations of arc resistance, amount of hang-down in heat sag examination, transparency, and mold abrasion property. It became clear that polyamide resin compositions are suitably usable for fuse elements for electric circuits for automobiles, for example, as represented in Figure 1.

In Examples 2 to 14, since phosphorous acid ester compound was added, results of further improved heat-resistant discoloration property wereobtained, and Examples 5 and 6 gave especially outstanding heat-resistant discoloration property. In every comparative example, there were problems with respect to heat-resistant discoloration property. Especially as shown in comparative Examples 1 to 7 the case in which only one of polyamide components was used was not satisfactory with respect to transparency and mold-releasing characteristic. Problem was shown in form retention property by heat sag examination in Comparative Examples 1 and 2. The amount of moldabrasion loss was large in Comparative Examples 6 and 7. There were problems in form retention property in Comparative Example 8, and in mold abrasion property in Comparative Example 9, respectively.

Industrial Applicability

According to the present invention, a polyamide resin composition assures sufficient arc resistance upon enhancement of vehicles voltage (42 V system), is excellent in rigidity, heat resistance and transparency. The polyamide resin composition may be suitably used in fuse elements of the present invention in electric circuits for automobiles etc.

**Claims**

1.  A fuse element comprising: a housing, a pair of terminals projecting from a predetermined flat surface thereof and aligned in a parallel state, and a fusing element connected between base end sides of both terminals in said housing, wherein said housing is formed from a polyamide resin composition comprising:

    100 parts by weight of a mixed polyamide consisting of:

    (A) 95 to 5% by weight of polycaproamide (nylon 6);
    (B) 5 to 95% by weight of poly(hexamethylene adipamide) (nylon 66); and
    (C) 0.1 to 20 parts by weight of a silicate layer of lamellar silicate per 100 parts by weight of said mixed polyamide dispersed on a molecular order level in said (A) and/or said (B).

2.  The fuse element according to claim 1,wherein the polyamide resin composition further comprises:

    (D) 0.1 to 4 parts by weight of an antioxidant to 100 parts by weight of said mixed polyamide.

3.  The fuse element according to claim 1 or 2, wherein the polyamide resin composition further comprises:

    (E) 0.01 to 0.5 parts by weight of a metal soap based lubricant to 100 parts by weight of said mixed polyamide.

4.  The fuse element according to any one of claims 1 to 3, wherein the polyamide resin composition further comprises:

    (F) 3 to 10 parts by weight of an inorganic fibrous reinforcing material to 100 parts by weight of said mixed polyamide.

5.  An automobile having a 42V system comprising the fuse element according to any one of claims 1 to 4.

6.  Use of a fuse element in a 42V system in an automobile, the fuse element comprising a housing, a pair of terminals projecting from a predetermined flat surface thereof and aligned in a parallel state, and a fusing element connected between base end sides of both terminals in said housing, wherein said housing is formed from a polyamide resin composition, comprising:

    100 parts by weight of a mixed polyamide consisting of:

    (A) 95 to 5% by weight of polycaproamide (nylon 6);
    (B) 5 to 95 % by weight of poly(hexamethylene adipamide) (nylon 66); and
    (C) 0.1 to 20 parts by weight of a silicate layer of lamellar silicate per 100 parts by weight of said mixed polyamide dispersed on a molecular order level in said (A) and/or said (B).

7. The use of a fuse element according to claim 6, wherein the polyamide resin composition further comprises:

(D) 0.1 to 4 parts by weight of an antioxidant to 100 parts by weight of said mixed polyamide.

8. The use of a fuse element according to claim 6 or 7, wherein the polyamide resin composition further comprises:

(E) 0.01 to 0.5 parts by weight of a metal soap based lubricant to 100 parts by weight of said mixed polyamide.

9. The use of a fuse element according to any one of claims 6 to 8, wherein the polyamide resin composition further comprises:

(F) 3 to 10 parts by weight of an inorganic fibrous reinforcing material to 100 parts by weight of said mixed polyamide.


**Patentansprüche**

1. Ein Sicherungselement umfassend: ein Gehäuse, ein Paar von Anschlüssen, welche aus einer vorbestimmten flachen Oberfläche herausragen und in einem parallelen Zustand ausgerichtet sind, und ein Sicherungsteil, welches zwischen den Basisendseiten beider Anschlusspunkte in dem Gehäuse verbunden ist, wobei das Gehäuse aus einer Polyamidharzzusammensetzung gebildet ist, umfassend:

100 Gewichtsteile eines gemischten Polyamids, bestehend aus:

(A) 95 bis 5 Gewichts-% Polycaproamid (Nylon 6);
(B) 5 bis 95 Gewichts-% Poly(hexamethylenadipamid) (Nylon 66); und
(C) 0,1 bis 20 Gewichtsteile einer Silikatschicht eines lamellaren Silicats pro 100 Gewichtsteile des gemischten Polyamids, die auf molekularer Ebene in (A) und/oder (B) dispergiert ist.

2. Das Sicherungselement nach Anspruch 1, wobei die Polyamidharzzusammensetzung weiter umfasst:

(D) 0,1 bis 4 Gewichtsteile eines Antioxidationsmittels auf 100 Gewichtsteile des gemischten Polyamids.

3. Ein Sicherungselement nach Anspruch 1 oder 2, wobei die Polyamidharzzusammensetzung weiter umfasst:

(E) 0,01 bis 0,5 Gewichtsteile eines Gleitmittels auf Basis einer Metallseife auf 100 Gewichtsteile des gemischten Polyamids.

4. Das Sicherungselement nach einem der Ansprüche 1 bis 3, wobei die Polyamidharzzusammensetzung weiter umfasst:

(F) 3 bis 10 Gewichtsteile eines anorganischen, faserförmigen Verstärkungsmaterials auf 100 Gewichtsteile des gemischten Polyamids.

5. Ein Automobil mit einem 42V-System, umfassend das Sicherungselement nach einem der Ansprüche 1 bis 4.

6. Verwendung eines Sicherungselements in einem 42V-System in einem Automobil, wobei das Sicherungselement ein Gehäuse, ein Paar von Anschlüssen, welche aus einer vorbestimmten flachen Oberfläche herausragen und in einem parallelen Zustand ausgerichtet sind, und ein Sicherungsteil umfasst, welches zwischen den Basisendseiten beider Anschlusspunkte in dem Gehäuse verbunden ist, wobei das Gehäuse aus einer Polyamidharzzusammensetzung gebildet ist, umfassend:

100 Gewichtsteile eines gemischten Polyamids, bestehend aus:

(A) 95 bis 5 Gewichts-% Polycaproamid (Nylon 6);
(B) 5 bis 95 Gewichts-% Poly(hexamethylenadipamid) (Nylon 66); und

(C) 0,1 bis 20 Gewichtsteile einer Silikatschicht eines lamellaren Silicats pro 100 Gewichtsteile des gemischten Polyamids, die auf molekularer Ebene in (A) und/oder (B) dispergiert ist.

7. Die Verwendung eines Sicherungselements nach Anspruch 6, wobei die Polyamidharzzusammensetzung weiter umfasst:

(D) 0,1 bis 4 Gewichtsteile eines Antioxidationsmittels auf 100 Gewichtsteile des gemischten Polyamids.

8. Die Verwendung eines Sicherungselements nach Anspruch 6 oder 7, wobei die Polyamidharzzusammensetzung weiter umfasst:

(E) 0,01 bis 0,5 Gewichtsteile eines Gleitmittels auf Basis einer Metallseife auf 100 Gewichtsteile des gemischten Polyamids.

9. Die Verwendung eines Sicherungselements nach einem der Ansprüche 6 bis 8, wobei die Polyamidharzzusammensetzung weiter umfasst:

(F) 3 bis 10 Gewichtsteile eines anorganischen, faserförmigen Verstärkungsmaterials auf 100 Gewichtsteile des gemischten Polyamids.

**Revendications**

1. Fusible comprenant : un boîtier, une paire de bornes saillant depuis une surface plate prédéterminée de celui-ci et alignées dans un état parallèle, et un élément fusible connecté entre les côtés d'extrémité de base des deux bornes dans ledit boîtier, dans lequel ledit boîtier est formé à partir d'une composition de résine polyamide comprenant :

100 parties en poids d'un polyamide mixte constitué de

(A) 95 à 5 % en poids de polycaproamide (nylon 6) ;
(B) 5 à 95 % en poids de poly(hexaméthylène-adipamide) (nylon 66) ; et
(C) 0,1 à 20 parties en poids d'une couche de silicate en silicate lamellaire, pour 100 parties en poids dudit polyamide mixte, dispersées au niveau moléculaire dans ledit (A) et/ou ledit (B).

2. Fusible selon la revendication 1, dans lequel la composition de résine polyamide comprend en outre :

(D) 0,1 à 4 parties en poids d'un antioxydant pour 100 parties en poids dudit polyamide mixte.

3. Fusible selon la revendication 1 ou 2, dans lequel la composition de résine polyamide comprend en outre :

(E) 0,01 à 0,5 partie en poids d'un lubrifiant à base de savon métallique pour 100 parties en poids dudit polyamide mixte.

4. Fusible selon l'une quelconque des revendications 1 à 3, dans lequel la composition de résine polyamide comprend en outre :

(F) 3 à 10 parties en poids d'un matériau de renforcement en fibres inorganiques pour 100 parties en poids dudit polyamide mixte.

5. Automobile ayant un système 42 V comprenant le fusible selon l'une quelconque des revendications 1 à 4.

6. Utilisation d'un fusible dans un système 42 V dans une automobile, le fusible comprenant un boîtier, une paire de bornes saillant depuis une surface plate prédéterminée de celui-ci et alignées dans un état parallèle, et un élément fusible connecté entre les côtés d'extrémité de base des deux bornes dans ledit boîtier, dans laquelle ledit boîtier est formé à partir d'une composition de résine polyamide comprenant :

100 parties en poids d'un polyamide mixte constitué de :

(A) 95 à 5 % en poids de polycaproamide (nylon 6) ;
(B) 5 à 95 % en poids de poly(hexaméthylène-adipamide) (nylon 66) ; et
(C) 0,1 à 20 parties en poids d'une couche de silicate en silicate lamellaire, pour 100 parties en poids dudit polyamide mixte, dispersées au niveau moléculaire dans ledit (A) et/ou ledit (B).

7. Utilisation d'un fusible selon la revendication 6, dans laquelle la composition de résine de polyamide comprend en outre :

(D) 0,1 à 4 parties en poids d'un antioxydant pour 100 parties en poids dudit polyamide mixte.

8. Utilisation d'un fusible selon la revendication 6 ou 7, dans laquelle la composition de résine polyamide comprend en outre :

(E) 0,01 à 0,5 partie en poids d'un lubrifiant à base de savon métallique pour 100 parties en poids dudit polyamide mixte.

9. Utilisation d'un fusible selon l'une quelconque des revendications 6 à 8, dans laquelle la composition de résine polyamide comprend en outre :

(F) 3 à 10 parties en poids d'un matériau de renforcement en fibres inorganiques pour 100 parties en poids dudit polyamide mixte.

## Fig. 1

## Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11140308 A
- EP 0885920 A1
- EP 1394214 A1